# EUROPÄISCHE PATENTSCHRIFT

(11) **EP 3 080 533 B1**
(45) Veröffentlichungstag und Bekanntmachung des Hinweises auf die Patenterteilung: **20.02.2019**
(21) Anmeldenummer: 14809858.5
(22) Anmeldetag: 10.12.2014
(51) Int. Cl.: F25D 27/00

(54) **HAUSHALTSKÄLTEGERÄT MIT EINER BELEUCHTUNG MIT LICHTLEITER**
DOMESTIC REFRIGERATION DEVICE HAVING ILLUMINATION DEVICE WITH AN OPTICAL WAVEGUIDE
APPAREIL MÉNAGER FRIGORIFIQUE COMPRENANT UN ÉCLAIRAGE MUNI D'UN GUIDE D'ONDES OPTIQUES

(30) Priorität: 13.12.2013 DE 102013225957
(43) Veröffentlichungstag der Anmeldung: 19.10.2016
(73) Patentinhaber: BSH Hausgeräte GmbH, 81739 München (DE)
(72) Erfinder: EICHER, Max, 80689 München (DE); KLEINLEIN, Philipp, 81371 München (DE); OSBAR, Bernd, 73430 Aalen (DE); SCHMID, Christian, 89165 Dietenheim (DE); WEBER, Armin, 73466 Lauchheim (DE); DANLER, Andreas, A-6176 Völs (AT); GSTREIN, Manfred, A-6067 Absam (AT); SEEBACHER, Georg, A-6176 Völs (AT)
(86) Internationale Anmeldenummer: PCT/EP2014/077261
(87) Internationale Veröffentlichungsnummer: WO 2015/086696

(56) Entgegenhaltungen:
- DE-A1- 10 310 330
- DE-A1-102008 041 626
- US-A1- 2004 062 031

## Beschreibung

Die Erfindung betrifft ein Haushaltskältegerät mit einer Beleuchtung mit einem Lichtleiter.

Die US 2006/0083024 offenbart eine Beleuchtung, welche einen Lichtleiter und zwei Leuchtmittel umfasst, welche ihr Licht in die Stirnseiten des Lichtleiters einkoppeln. Um eine möglichst gleichmäßige Lichtverteilung innerhalb des Lichtleiters zu erreichen, kann am Lichtleiter eine Licht reflektierende Schicht angeordnet sein.

Die DE 10 2010 031 696 A1 offenbart ein Kühl- und/oder Gefriergerät mit zwei kühlbaren Innenräumen, welche auf verschieden Temperaturen gekühlt werden. Die Innenraumbeleuchtung ist als eine Lichtsäule ausgeführt, welche sich über beide kühlbaren Innenräume erstreckt. Die Lichtsäule kann einen Lichtleiter umfassen und kann in oder auf einer Wand der kühlbaren Innenräume verlaufen.

Die US 2004/0062031 A1 offenbart ein Haushaltskältegerät, in dessen kühlbaren Innenraum mehrere beleuchtete Fachböden angeordnet sind. Die beleuchteten Fachböden umfassen jeweils eine lichtleitende Ablagefläche und Leuchtmittel, die mit der Ablagefläche gekoppelt sind, um Licht in die Ablagefläche einzukoppeln.

Die DE 103 10 330 A1 offenbart ein Haushaltskältegerät mit einer Innenraumbeleuchtung. Die Innenraumbeleuchtung umfasst einen Leuchtkörper, der ein Leuchtmittel, z.B. eine Leuchtröhre, umfasst, die in einer Vertiefung der Innenseite des Innenbehälters des kühlbaren Innenraums des Kältegerätes befestigt ist. Die Innenraumbeleuchtung umfasst einen halbzylinderförmigen Schirm, innerhalb dem die Leuchtröhre angeordnet ist.

Die DE 10 2008 041 626 A1 offenbart ein Haushaltskältegerät mit einer Innenraumbeleuchtung. Die Innenraumbeleuchtung umfasst einen länglichen Lichtleiter, der mit vorsprungsförmigen Auskopplungsstellen versehen ist. Die Auskopplungsstellen sind an einer von dem Innenraum abgewandten Hauptoberfläche des Lichtleiters angeordnet, sodass die Auskopplungsstellen an derselben Seite angeordnet sind, an der das Licht austritt, also an der Vorderseite des Lichtleiters.

Aufgabe der vorliegenden Erfindung ist es, eine weitere Beleuchtung mit einem Lichtleiter anzugeben, bei der eine möglichst gleichmäßige Lichtverteilung innerhalb des Lichtleiters vorherrscht und welche insbesondre einfacher herstellbar ist.

Die Aufgabe der Erfindung wird gelöst durch ein Haushaltskältegerät mit einer Beleuchtung, aufweisend wenigstens ein Leuchtmittel und einen länglichen Lichtleiter, der eine Länge, zwei Enden, eine Rückseite und eine der Rückseite gegenüberliegende Vorderseite aufweist, wobei eines der beiden Enden mit dem wenigstens einen Leuchtmittel oder jedes der beiden Enden mit wenigstens einem der Leuchtmittel optisch gekoppelt ist, die Rückseite des Lichtleiters eine Auskopplungsstruktur aufweist, welche integraler Bestandteil der Rückseite des Lichtleiters und eingerichtet ist, das in den Lichtleiter eingekoppeltes Licht aus dem Lichtleiter zumindest über den Großteil seiner gesamten Länge über dessen Vorderseite auszukoppeln.

Die erfindungsgemäße Haushaltskältegerät mit Beleuchtung umfasst demnach den länglichen Lichtleiter. An einem der Enden des Lichtleiters oder an dessen beiden Enden, also stirnseitig, wird Licht des oder der Leuchtmittel der Beleuchtung eingekoppelt. Das wenigstens eine Leuchtmittel ist vorzugsweise als wenigstens eine LED ausgeführt. Für eine relativ gute optische Kopplung liegt das Leuchtmittel bzw. die LED vorzugsweise an dem entsprechenden Ende bzw. an der Oberfläche des entsprechenden Endes des Lichtleiters an bzw. berührt es. Somit wird lediglich an einem oder gegebenenfalls an beiden Enden des Lichtleiters Licht eingekoppelt, sodass vorzugsweise nur eine einzige LED vorgesehen ist, falls lediglich Licht an einem der beiden Enden in den Lichtleiter eingekoppelt wird, bzw. vorzugsweise lediglich eine einzige LED pro Ende vorgesehen ist, falls Licht an beiden Enden des Lichtleiters eingekoppelt wird. Dadurch kann die Anzahl benötigter Leuchtmittel bzw. LEDs verringert werden.

Der Lichtleiter ist länglich ausgebildet und kann insbesondere relativ klein bzw. dünn ausgebildet sein. Insbesondere verlaufen die Rückseite und die Vorderseite zwischen den beiden Enden des Lichtleiters. Der Lichtleiter ist vorzugsweise stabförmig ausgebildet. Das in den Lichtleiter eingekoppelte Licht wird an dessen Vorderseite, also längs des Lichtleiters, ausgekoppelt. Damit die Beleuchtung über die Länge des Lichtleiters möglichst gleichmäßig Licht ausstrahlt, ist die der Vorderseite des Lichtleiters gegenüberliegende Rückseite mit der Auskopplungsstruktur versehen, welche für eine möglichst gleichmäßige Lichtverteilung innerhalb des Lichtleiters sorgt. Erfindungsgemäß ist diese Auskopplungsstruktur integraler Bestandteil des Lichtleiters, also Teil des Lichtleiters, genauer gesagt integraler Bestandteil der Rückseite des Lichtleiters. Dadurch kann die Anzahl benötigter Bestandteile der erfindungsgemäßen Beleuchtung verringert werden.

Die Erfindung betrifft ein Haushaltskältegerät, aufweisend einen wärmeisolierten Korpus mit einem Innenbehälter, der einen zum Lagern von Lebensmitteln vorgesehenen kühlbaren Innenraum begrenzt, eine Kältevorrichtung zum Kühlen des kühlbaren Innenraums, ein Türblatt, welches vorgesehen ist, im geschlossenen Zustand den kühlbaren Innenraum zu verschließen und im geöffneten Zustand zugänglich zu machen, und eine am Innenbehälter, befestigte Innenraumbeleuchtung zum Beleuchten des kühlbaren Innenraums bei geöffnetem Türblatt.

Das erfindungsgemäße Haushaltskältegerät umfasst den wärmeisolierten Korpus mit dem Innenbehälter, der den kühlbaren Innenraum begrenzt. Dieser wird mittels der Kältevorrichtung gekühlt. Diese ist vorzugsweise als ein dem Fachmann im Prinzip bekannter Kältemittelkreislauf ausgebildet und ist vorzugsweise derart ausgeführt, dass er den kühlbaren Innenraum zumindest in etwa auf eine vorgegebene Temperatur kühlt. Der kühlbare Innenraum ist zum Lagern von Lebensmitteln vorgesehen.

Das erfindungsgemäße Haushaltskältegerät kann z.B. ein Haushaltskühlgerät sein. In diesem Fall wird der kühlbare Innenraum auf Temperaturen größer als 0°C gekühlt. Das erfindungsgemäße Haushaltskältegerät kann auch ein Haushaltsgefriergerät sein. In diesem Fall wird der kühlbare Innenraum auf Temperaturen kleiner als 0°C gekühlt. Das erfindungsgemäße Haushaltskältegerät kann aber auch eine Gefrier-Kühlkombination sein. Das erfindungsgemäße Haushaltskältegerät kann genau einen kühlbaren Innenraum, aber auch mehrere kühlbare Innenräume aufweisen, welche auch mittels jeweils einem Türblatt verschlossen und geöffnet werden können. Jede der kühlbaren Innenräume kann eine separate erfindungsgemäße Beleuchtung als Innenraumbeleuchtung aufweisen.

Das erfindungsgemäße Haushaltskältegerät kann insbesondere derart ausgeführt sein, dass die Innenraumbeleuchtung nur bei geöffnetem Türblatt eingeschaltet, also bei geschlossenem Türblatt ausgeschaltet ist. Dazu kann das erfindungsgemäße Haushaltskältegerät einen dem Fachmann im Prinzip bekannten Türöffnungsschalter aufweisen.

Das erfindungsgemäße Haushaltskältegerät kann auch als ein Weinkühlschrank ausgebildet sein, der vorgesehen ist, mit trinkbarer Flüssigkeit, insbesondere Wein, gefüllte Flaschen zu lagern. In diesem Fall ist das Türblatt vorzugsweise zumindest teilweise durchsichtig, indem es z.B. zumindest teilweise aus Glas gefertigt ist. Insbesondere in diesem Fall kann die Innenraumbeleuchtung den kühbaren Innenraum auch bei geschlossenem Türblatt beleuchten.

Die Innenraumbeleuchtung ist insbesondere in einer Vertiefung, vorzugsweise einer taschenförmigen Vertiefung des Innenbehälters befestigt. Der Innenbehälter ist vorzugsweise aus Kunststoff. Die Vertiefung kann durch Tiefziehen hergestellt werden.

Der Innenbehälter kann zwei Seitenwände, eine Decke und eine Rückwand umfassen. Die Innenraumbeleuchtung kann z.B. an einer der beiden Seitenwände des Innenbehälters befestigt sein. Es ist auch möglich, dass an einer der beiden Seitenwände mehrere Innenraumbeleuchtungen befestigt sind. Es können auch beide Seitenwände mit wenigstens einer Innenraumbeleuchtung versehen sein. Zusätzlich oder alternativ können auch die Rückwand und/oder die Decke mit wenigstens einer Innenraumbeleuchtung versehen sein.

Die taschenförmige Vertiefung ist vorzugsweise rechteckförmig und insbesondere länglich ausgeführt. Sie erstreckt sich insbesondere in vertikaler Richtung über zumindest einen Teil einer der Seitenwände des Innenbehälters.

Vorzugsweise erstreckt sich gemäß einer bevorzugten Variante der erfindungsgemäßen Beleuchtung die Auskopplungsstruktur über die gesamte Länge des Lichtleiters auf dessen Rückseite. Somit kann auch in den Bereichen der beiden Enden eine relativ gleichmäßige Lichtverteilung innerhalb des Lichtleiters erreicht werden.

Die Auskopplungsstruktur ist nach einer bevorzugten Ausführungsform der erfindungsgemäßen Beleuchtung als in die Rückseite des Lichtleiters eingebrachte Rillen oder Kerben ausgeführt ist. Aufgrund der Rillen bzw. Kerben wird das Reflexionsverhalten von Licht innerhalb des Lichtleiters beeinflusst, wodurch sich durch eine geeignete Auslegung der Rillen bzw. Kerben eine möglichst gleichförmige Lichtverteilung innerhalb des Lichtleiters ergibt. Auch Streukörper als Auskopplungsstruktur sind denkbar. Rillen oder Kerben sind jedoch bevorzugt, das sie relativ einfach in die Rückseite eingebracht werden können.

Die Rillen oder Kerben bzw. Streukörper sind beispielsweise pyramidenförmig, zylinderförmig und/oder halbkugelförmig ausgeführt. Die zylinderförmigen Kerben bzw. Streukörper weisen vorzugsweise kreisförmige Grundflächen auf.

Die Auskopplungsstruktur, insbesondere die Rillen oder Kerben bzw. Streukörper, können längs der Länge des Lichtleiters gleichförmig verteilt sein. Vorzugsweise nehmen aber die Tiefe der Rillen oder Kerben und/oder die Dichte der Rillen oder Kerben bzw. Streukörper zu, je weiter diese von den Leuchtmitteln bzw. von den Enden den Lichtleiters entfernt sind. Die letztere Variante ist bei relativ langen Lichtleitern vorteilhaft.

Ist z.B. lediglich an einem der beiden Enden das wenigstens eine Leuchtmittel mit diesem Ende optisch gekoppelt, so nehmen nach einer weiteren bevorzugten Variante der erfindungsgemäßen Beleuchtung die Tiefe und/oder die Dichte der Rillen oder Kerben bzw. Streukörper mit größerer Entfernung von diesem Ende zu.

Sind jedoch beide Enden des Lichtleiters mit jeweils wenigstens einem der Leuchtmittel optisch gekoppelt, so nehmen nach einer weiteren bevorzugten Variante der erfindungsgemäßen Beleuchtung die Tiefe und/oder die Dichte der Rillen oder Kerben bzw. Streukörper von den beiden Enden in Richtung Mitte des Lichtleiters zu. Gemäß dieser Variante der erfindungsgemäßen Beleuchtung weist also die Rückseite des Lichtleiters die tiefsten Kerben oder Rillen und/oder die höchste Dichte an Rillen oder Kerben bzw. Streukörper auf.

Die Vorderseite des Lichtleiters ist als eine in den Lichtleiter integrierte Optik entsprechend einer gewünschten Abstrahlcharakteristik der Beleuchtung ausgebildet. Dadurch kann in relativ einfacher und bauteilesparender Weise die Abstrahlcharakteristik der erfindungsgemäßen Beleuchtung angepasst werden. Aufgrund der Integration der Optik in en Lichtleiter entfällt außerdem ein zusätzliches, die Optik der Beleuchtung bildendes Bauteil.

Die Optik ist als eine konvexe Wölbung der Vorderseite des Lichtleiters ausgebildet. Je nach Wölbung kann der Abstrahlwinkel, der sich bezüglich einer Ebene ergibt, welche rechtwinklig zur Rückseite, mittig bezüglich der Breite und längs der Länge des Lichtleiters ausgerichtet ist, beeinflusst werden. Die Wölbung verläuft vorzugsweise gleichmäßig zumindest über einen Großteil der Länge des Lichtleiters, um insbesondere eine gleichmäßige Abstrahlcharakteristik der erfindungsgemäßen Beleuchtung entlang der gesamten Länge, zumindest jedoch über den Großteil der gesamten Länge des Nichtleiters zu erhalten.

Soll z.B. die Abstrahlcharakteristik der erfindungsgemäßen Beleuchtung derart ausgeführt sein, dass das aus dem Lichtleiter strahlende Licht mit denselben Abstrahlwinkeln bezüglich der eben genannten Ebene strahlen soll, dann ist die die Optik bildende Wölbung der Vorderseite vorzugsweise symmetrisch relativ zu dieser Ebene ausgebildet.

Nach einer Ausführungsform der erfindungsgemäßen Beleuchtung ist die die Optik bildende Wölbung der Vorderseite asymmetrisch relativ zur Ebene ausgebildet, welche rechtwinklig zur Rückseite, mittig bezüglich der Breite und längs der Länge des Lichtleiters ausgerichtet ist. Diese Variante bietet sich z.B. dann an, wenn die Abstrahlcharakteristik der als Innenraumbeleuchtung des erfindungsgemäßen Haushaltskältegerätes ausgebildeten erfindungsgemäßen Beleuchtung, welche vertikal an einer der Seitenwände des Innenbehälters befestigt ist, derart ausgeführt sein soll, dass das aus dem Lichtleiter strahlende Licht möglichst den gesamten kühlbaren Innenraum ab dem Lichtleiter bis zur Rückwand des Innenbehälters beleuchtet, jedoch möglichst nicht den Innenbehälter ab dem Lichtleiter bis zum Türblatt.

Der Lichtleiter umfasst insbesondere zwei gegenüberliegende, die Vorderseite und die Rückseite verbindende Seitenflächen. Im Falle des Haushaltskältegerätes ist die Rückseite des Lichtleiters der Vertiefung bzw. dem Innenbehälter zugewandt. Die Breite der Vertiefung entspricht insbesondere der Breite des Lichtleiters.

Vorzugsweise ist die Vertiefung derart ausgeführt, dass der Lichtleiter wenn, dann nur relativ wenig mit seiner Vorderseite aus der Vertiefung heraus ragt.

Die die Rückseite mit den Seitenflächen verbindenden Kanten sind vorzugsweise abgerundet.

Vorzugsweise kann es vorgesehen sein, dass die Übergangsbereiche zwischen der Vorderseite und den Seitenflächen bündig mit der in Richtung Innenraum gerichteten Oberfläche des Innenbehälters bzw. dessen Seitenwand verlaufen.

Die Auskopplung des Lichts erfolgt über die in die Rückseite des Lichtleiters integrierte Auskopplungsstruktur, beispielsweise mittels Extraktoren auf der Rückseite. Die Extraktoren sind vorzugsweise so angeordnet (Dichte, Größe), dass die Auskopplung möglichst gleichmäßig über die Länge des Lichtleiters erfolgt.

Insbesondere durch einen kombinierten Lichtleiter, der sowohl Auskoppelstruktur sowie Optik enthält, kann das insbesondere als Haushaltskühlgerät ausgebildete Haushaltskältegerät relativ gut ausgeleuchtet werden. Das Licht wird dabei vorzugsweise von LEDs erzeugt, die stirnseitig in den Lichtleiter einkoppeln. Durch den Einsatz einer geeigneten Struktur auf der Rückseite des Lichtleiters, d.h. der Auskopplungsstruktur, wird das Licht möglichst gleichmäßig über vorzugsweise die gesamte Länge des Lichtleiters nach vorne (Vorderseite) ausgekoppelt. Mittels der vorzugsweise vorhandenen vorne befindlichen Optik kann dieses Licht dann entsprechend den Anforderungen des jeweiligen Haushaltskältegerätes im Innenraum verteilt werden.

Der Lichtleiter kann dabei sehr klein ausgeführt und vorzugsweise im Innenbehälter insbesondere flächenbündig eingebaut sein.

Ein Ausführungsbeispiel der Erfindung ist exemplarisch in den beigefügten schematischen Zeichnungen dargestellt. Es zeigen:
- Fig. 1: ein Haushaltskältegerät mit einem Innenbehälter und einer am Innenbehälter befestigten Innenraumbeleuchtung in einer perspektivischen Darstellung,
- Fig. 2: einen Schnitt einer Vorderansicht des Innenbehälters mit daran befestigter Innenraumbeleuchtung,
- Fig. 3: eine Detailansicht eines Teils eines Lichtleiters der Innenraumbeleuchtung, und

- Fig. 4: einen Schnitt des Innenbehälters und der Innenraumbeleuchtung der Fig. 2 entlang der Linie B-B.

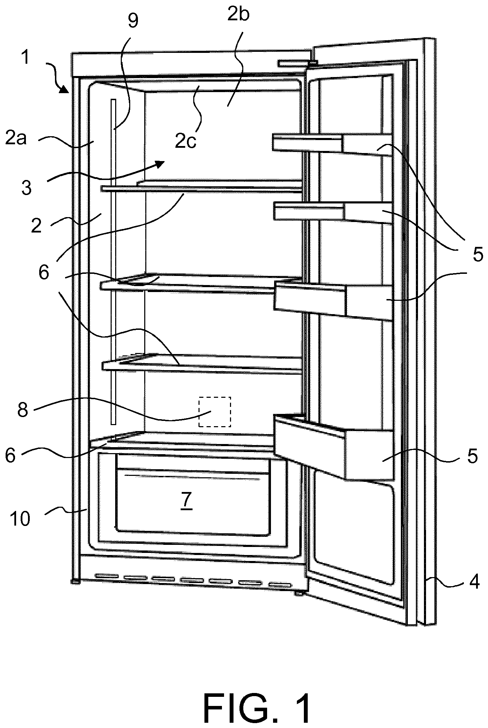

Die Fig. 1 zeigt in einer perspektivischen Darstellung ein Haushaltskältegerät 1, das einen wärmeisolierten Korpus 10 mit einem Innenbehälter 2 umfasst, der einen zum Lagern von Lebensmitteln vorgesehenen kühlbaren Innenraum 3 begrenzt. Der Innenbehälter 2 und umfasst zwei gegenüber liegende Seitenwände 2a, eine Rückwand 2b und eine Decke 2c.

Das Haushaltskältegerät 1 weist im Falle des vorliegenden Ausführungsbeispiels ein bezüglich einer nicht näher gezeigten vertikal verlaufenden Achse schwenkbares Türblatt 4 zum Verschließen des kühlbaren Innenraums 3 auf.

Bei geöffnetem Türblatt 4 ist der kühlbare Innenraum 3 zugänglich. An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst eine nicht näher dargestellte, dem Fachmann im Prinzip bekannte Kältevorrichtung vorzugsweise in Form eines Kältemittelkreislaufs zum Kühlen des kühlbaren Innenraums 3. Der Kältemittelkreislauf umfasst z.B. einen Verdichter, einen dem Verdichter nachgeschalteten Verflüssiger, eine dem Verflüssiger nachgeschaltete Drosselvorrichtung, die insbesondere als ein Drossel- oder Kapillarrohr ausgeführt ist, und einen Verdampfer, der zwischen der Drosselvorrichtung und dem Verdichter angeordnet ist.

Das Haushaltskältegerät 1 kann als ein so genanntes No-Frost Haushaltskältegerät ausgeführt sein.

Das Haushaltskältegerät 1 kann auch als so genannter Wein-Kühlschrank ausgebildet sein. In diesem Fall handelt es sich bei den Lebensmitteln vorzugsweise um mit Wein oder einer anderen trinkbaren Flüssigkeit gefüllte Flaschen. Das Türblatt 4 ist in diesem Fall vorzugsweise zumindest teilweise durchsichtig. Es ist z.B. zumindest teilweise aus Glas gefertigt. In diesem Fall kann es vorgesehen sein, dass am Türblatt 4 keine Türabsteller 5 angeordnet sind.

Das Haushaltskältegerät 1 umfasst im Falle des vorliegenden Ausführungsbeispiels eine Steuervorrichtung 8, welche beispielsweise eine Elektronik umfasst und eingerichtet ist, die Kältevorrichtung, insbesondere den Verdichter des Kältemittelkreislaufs in für den Fachmann in allgemein bekannter Weise derart anzusteuern, dass der kühlbare Innenraum 3 zumindest in etwa eine vorgegebene oder vorgebbare Soll-Temperatur aufweist. Die Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der Steuervorrichtung 8 verbundenen Temperatursensor aufweisen.

Im Falle des vorliegenden Ausführungsbeispiels umfasst das Haushaltskältegerät 1 wenigstens eine Innenraumbeleuchtung 9, die vorgesehen ist, den kühlbaren Innenraum 3 vorzugsweise lediglich bei geöffnetem Türblatt 4 zu beleuchten. Dazu kann das Haushaltskältegerät 1 einen nicht näher dargestellten Türöffnungsschalter umfassen. Ist das Haushaltskältegerät 1 als der Wein-Kühlschrank ausgebildet, dann kann es auch vorgesehen sein, dass die Innenraumbeleuchtung 9 den kühlbaren Innenraum 3 auch bei geschlossenem Türblatt 4 beleuchtet.

Im Falle des vorliegenden Ausführungsbeispiels ist die Innenraumbeleuchtung 9 an einer der beiden Seitenwände 2a des Innenbehälters 2 befestigt. Es ist auch möglich, dass an einer der beiden Seitenwände 2a mehrere Innenraumbeleuchtungen 9 befestigt sind. Es können auch beide Seitenwände 2a mit wenigstens einer Innenraumbeleuchtung 9 versehen sein. Zusätzlich oder alternativ kann auch die Rückwand 2b und/oder die Decke 2c mit wenigstens einer Innenraumbeleuchtung 9 versehen sein.

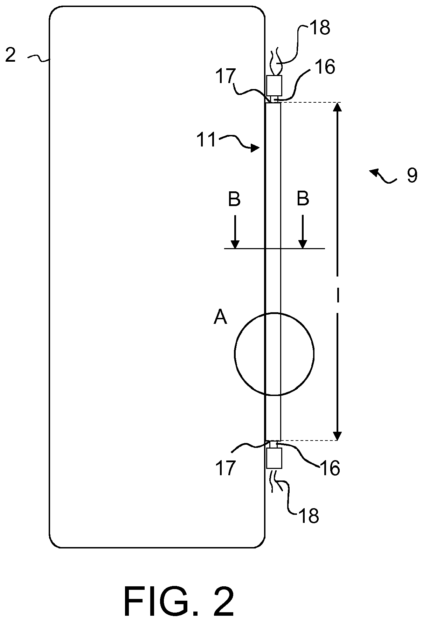

Die Fig. 2 zeigt einen Schnitt einer Vorderansicht des Innenbehälters 2 mit daran befestigter Innenraumbeleuchtung 9.

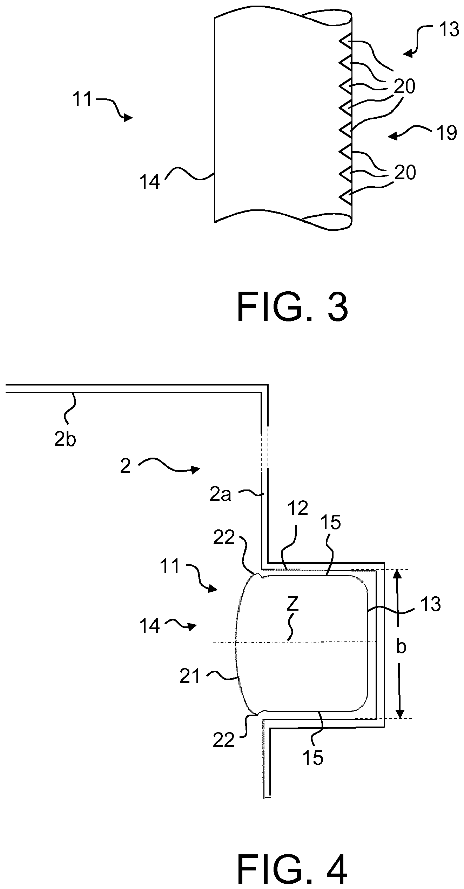

Im Falle des vorliegenden Ausführungsbeispiels umfasst die Innenraumbeleuchtung 9 einen länglichen, durchgehenden bzw. einstückigen Lichtleiter 11 mit Länge l. Eine Detailansicht eines Teils des Lichtleiters 11 im Bereich A ist in der Fig. 3 dargestellt und die Fig. 4 zeigt einen Schnitt des Innenbehälters 2 und der Innenraumbeleuchtung 9 entlang der Linie B-B. Die Innenraumbeleuchtung 9 ist ein Beispiel einer Beleuchtung mir einem Lichtleiter.

Der Lichtleiter 11 ist z.B. in oder an der Seitenwand 2a des Innenbehälters 2 befestigt und erstreckt sich vorzugsweise in vertikale Richtung. Vorzugsweise ist der Lichtleiter 11 versenkt in der entsprechenden Wand des Innenbehälters 2 befestigt, insbesondere in einer Vertiefung 12 der entsprechenden Wand des Innenbehälters 2. Die Vertiefung 12 ist insbesondere taschenförmig ausgeführt und ist vorzugsweise durch Tiefziehen des Innenbehälters 2 hergestellt. Die Länge der Vertiefung 12 entspricht der Länge l des Lichtleiters 11.

Im Falle des vorliegenden Ausführungsbeispiels weist der Lichtleiter 11 eine Rückseite 13, eine Vorderseite 14 und zwei gegenüberliegende, die Vorderseite 14 und die Rückseite 13 verbindende Seitenflächen 15 auf. Die Rückseite 13 des Lichtleiters 11 ist der Vertiefung 12 bzw. dem Innenbehälter 2 zugewandt. Die Breite der Vertiefung 12 entspricht der Breite b des Lichtleiters 11.

Vorzugsweise ist die Vertiefung 12 derart ausgeführt, dass der Lichtleiter 11 wenn, dann nur relativ wenig mit seiner Vorderseite 14 aus der Vertiefung 12 heraus ragt.

Im Falle des vorliegenden Ausführungsbeispiels sind die die Rückseite 13 mit den Seitenflächen 15 verbindenden Kanten abgerundet.

Die Innenraumbeleuchtung 9 umfasst wenigstens ein mit dem Lichtleiter 11 optisch gekoppeltes Leuchtmittel, dessen Licht im Betrieb der Innenraumbeleuchtung 9 in den Lichtleiter 11 eingekoppelt wird. Das Leuchtmittel ist vorzugsweise als wenigstens eine LED 16 ausgeführt bzw. umfasst wenigstens die LED 16. Die wenigstens eine LED 16 ist vorzugsweise mit dem Lichtleiter 11 derart optisch gekoppelt, indem sie diesen berührt. Im Falle des vorliegenden Ausführungsbeispiels sind an beiden Enden 17 des Lichtleiters 11 wenigstens ein Leuchtmittel vorgesehen, welche jeweils als wenigstens eine LED 16 ausgeführt ist bzw. wenigstens eine LED 16 umfasst. Es kann aber auch vorgesehen sein, dass lediglich an einem der beiden Enden 17 des Lichtleiters 11 ein Leuchtmittel vorzugsweise in Form wenigstens einer LED 16 vorgesehen ist.

Im Falle des vorliegenden Ausführungsbeispiels sind die Leichtmittel bzw. die LEDs 16 innerhalb der Seitenwand 2a angeordnet, insbesondere in der Seitenwand 2a eingeschäumt. Die Leuchtmittel bzw. LEDs 16 werden insbesondere mit elektrischen Kabeln 18 vorzugsweise bei geöffnetem Türblatt 4 mit elektrischer Energie versorgt. Die elektrischen Kabeln 18 verlaufen vorzugsweise innerhalb der Seitenwand 2a.

Der Lichtleiter 11 ist im Falle des vorliegenden Ausführungsbeispiels derart ausgeführt, dass das von dem oder den LEDs 16 eingekoppelte Licht mit seiner dem kühlbaren Innenraum 3 zugewandten Seite, also seiner Vorderseite 14, in den kühlbaren Innenraum 3 auskoppelt.

Der Lichtleiter 11 ist derart ausgeführt, dass sich das von dem oder den LEDs 16 eingekoppelte Licht möglichst gleichmäßig im Lichtleiter 11 verteilt, um über seine Länge l eine möglichst gleichmäßige Lichtabstrahlung durch seine Vorderseite 14 zu erreichen.

Um diese möglichst gleichmäßige Lichtverteilung über die Länge l des Lichtleiters 11 zu erreichen bzw. diese möglichst gleichmäßige Abstrahlcharakteristik des Lichtleiters 11 entlang seiner Länge l zu erreichen, ist die Rückseite 13 des Lichtleiters 11 zumindest über den Großteil ihrer Länge l strukturiert bzw. mit einer Auskopplungsstruktur 19 versehen, welche integraler Bestandteil des Lichtleiters 11 ist. Die Auskopplungsstruktur 19 kann z.B. eine Mehrzahl von Rillen oder Kerben 20 und/oder Streukörpern umfassen, welche in die Rückseite 13 des Lichtleiters 11 eingebracht sind. Die Rillen oder Kerben 20 bzw. die Streukörper sind z.B. pyramidenförmig, zylinderförmig mit insbesondere einer kreisförmigen Grundfläche, halbkugelförmig, usw. Aufgrund der in die Rückseite 13 integrierte Auskopplungsstruktur 19 wird das in den Lichtleiter 11 eingekoppelte Licht möglichst gleichmäßig über die gesamte Länge l des Lichtleiters 11 auf der Vorderseite 14 des Lichtleiters 11 ausgekoppelt.

Die Auskopplungsstruktur 20 kann längs der Länge I des Lichtleiters 11 gleichförmig verteilt sein. Vorzugsweise nehmen aber die Tiefe der Rillen oder Kerben 20 und/oder die Dichte der Rillen oder Kerben 20 bzw. der Streukörper zu, je weiter diese von den LEDs 16 entfernt sind. Sind an jedem der beiden Enden 17 des Lichtleiters 11 wenigstens ein Leuchtmittel insbesondere wenigstens eine LED 16 vorgesehen, welche ihr Licht in den Lichtleiter 11 einkoppeln, dann weisen vorzugsweise die Rillen oder Kerben 20 in der Mitte der Lichtleiters 11 die größte Tiefe und/oder Dichte auf. Ist jedoch nur wenigstens ein Leuchtmittel bzw. wenigstens eine LED 16 an einem der Enden 17 des Lichtleiters 11 vorgesehen, dass nimmt vorzugsweise die Tiefe und oder die Dichte der Rillen oder Kerben 20 mit größerer Entfernung von der wenigstens einen LED 16 bzw. von dem entsprechenden Ende 17 des Lichtleiters zu.

Die Vorderseite 14 des Lichtleiters 11 ist als eine in den Lichtleiter 11 integrierte Optik 21 ausgebildet, indem die Vorderseite 14 des Lichtleiters 11 entsprechend der gewünschten Abstrahlcharakteristik der Innenraumbeleuchtung 9 geformt ist. Die die Optik 21 bildende Wölbung der Vorderseite 14 ist insbesondere konvex ausgeführt. Vorzugsweise verläuft die Wölbung der als Optik 21 ausgebildeten Vorderseite 14 gleichmäßig über die gesamte Länge l, zumindest jedoch über einen GrOßteil der Länge l des Lichtleiters 11.

Je nach gewünschter Ausleuchtung des kühlbaren Innenraums 3 weist die Wölbung eine bestimmte Form auf, damit die Optik 21 eine entsprechende Abstrahlcharakteristik erhält. Soll z.B. die Abstrahlcharakteristik der Innenraumbeleuchtung 9 derart ausgeführt sein, dass das aus dem Lichtleiter 11 strahlende Licht mit denselben Abstrahlwinkeln in Richtung Rückwand 2b und in Richtung des Türblatts 4 strahlen soll, dann ist die die Optik 21 bildende Wölbung der Vorderseite 14 symmetrisch relativ zu einer Ebene Z ausgebildet, welche rechtwinklig zur Rückseite 13, mittig bezüglich der Breite b und längs der Länge l des Lichtleiters 11 ausgerichtet ist. Soll dagegen. die Abstrahlcharakteristik der Innenraumbeleuchtung 9 derart ausgeführt sein, dass das aus dem Lichtleiter 11 strahlende Licht möglichst den gesamten kühlbaren Innenraum 9 ab dem Lichtleiter 11 bis zur Rückwand 2b des Innenbehälters 2 beleuchtet, jedoch möglichst nicht den Innenbehälter 2 ab dem Lichtleiter 11 bis zum Türblatt 4, dann ist die die Optik 21 bildende Wölbung der Vorderseite 14 asymmetrisch relativ zur Ebene Z ausgebildet, welche rechtwinklig zur Rückseite 13, mittig bezüglich der Breite b und längs der Länge l des Lichtleiters 11 ausgerichtet ist.

Im Falle des vorliegenden Ausführungsbeispiels ist es vorzugsweise vorgesehen, dass die Übergangsbereiche 22 zwischen der Vorderseite 14 und den Seitenflächen 15 bündig mit der in Richtung Innenraum 3 gerichteten Oberfläche des Innenbehälters 2 bzw. dessen Seitenwand 2a verlaufen.

### BEZUGSZEICHENLISTE

- 1: Haushaltskältegerät
- 2: Innenbehälter
- 2a: Seitenwände
- 2b: Rückwand
- 2c: Decke
- 3: kühlbarer Innenraum
- 4: Türblatt
- 5: Türabsteller
- 6: Fachböden
- 7: Schublade
- 8: Steuervorrichtung
- 9: Innenraumbeleuchtung
- 10: Korpus
- 11: Lichtleiter
- 12: Vertiefung
- 13: Rückseite
- 14: Vorderseite
- 15: Seitenflächen
- 16: LED
- 17: Enden
- 18: Kabel
- 19: Auskopplungsstruktur
- 20: Rillen oder Kerben
- 21: Optik
- 22: Übergangsbereiche
- b: Breite
- l: Länge
- Z: Ebene

## Patentansprüche

1. Haushaltskältegerät, aufweisend einen wärmeisolierten Korpus (10) mit einem Innenbehälter (2), der einen zum Lagern von Lebensmitteln vorgesehenen kühlbaren Innenraum (3) begrenzt, eine Kältevorrichtung zum Kühlen des kühlbaren Innenraums (3), ein Türblatt (4), welches vorgesehen ist, im geschlossenen Zustand den kühlbaren Innenraum (3) zu verschließen und im geöffneten Zustand zugänglich zu machen, und eine am Innenbehälter (2), insbesondere in einer Vertiefung (12) des Innenbehälters (2) befestigte Innenraumbeleuchtung (9) zum Beleuchten des kühlbaren Innenraums (3) bei geöffnetem Türblatt (4), wobei die Beleuchtung wenigstens ein Leuchtmittel (16) und einen länglichen Lichtleiter (11) aufweist, und wobei der Lichtleiter (11) eine Länge (l), zwei Enden (17), eine Rückseite (13) und eine der Rückseite (13) gegenüberliegende Vorderseite (14) aufweist, wobei eines der beiden Enden (17) mit dem wenigstens einen Leuchtmittel (16) oder jedes der beiden Enden (17) mit wenigstens einem der Leuchtmittel (16) optisch gekoppelt ist, wobei die Rückseite (13) des Lichtleiters (11) eine Auskopplungsstruktur (19) aufweist, welche integraler Bestandteil der Rückseite (13) des Lichtleiters (1) und eingerichtet ist, das in den Lichtleiter (11) eingekoppelte Licht aus dem Lichtleiter (11) zumindest über den Großteil seiner gesamten Länge (l) über dessen Vorderseite (14) auszukoppeln, und wobei die Vorderseite (14) des Lichtleiters (11) als eine in den Lichtleiter (11) integrierte Optik (21) entsprechend einer gewünschten Abstrahlcharakteristik der Beleuchtung (9) ausgebildet ist,
**dadurch gekennzeichnet, dass**
die Optik (21) als eine konvexe Wölbung der Vorderseite (14) des Lichtleiters (11) ausgebildet ist, welche vorzugsweise gleichmäßig zumindest über einen Großteil der Länge (I) des Lichtleiters (11) verläuft.

2. Haushaltskältegerät nach Anspruch 1, **dadurch gekennzeichnet, dass** sich die Auskopplungsstruktur (19) über die gesamte Länge (l) des Lichtleiters (11) auf dessen Rückseite (13) erstreckt.

3. Haushaltskältegerät nach Anspruch 1 oder 2, **dadurch gekennzeichnet, dass** die Auskopplungsstruktur (19) als in die Rückseite (13) des Lichtleiters (11) eingebrachte Rillen, Kerben (20) und/oder Streukörper ausgeführt ist.

4. Haushaltskältegerät nach Anspruch 3, **dadurch gekennzeichnet, dass** die Rillen, Kerben (20) und/oder Streukörper pyramidenförmig, zylinderförmig mit insbesondere einer kreisförmigen Grundfläche, und/oder halbkugelförmig ausgebildet sind.

5. Haushaltskältegerät nach Anspruch 3 oder 4, **dadurch gekennzeichnet, dass** lediglich an einem der beiden Enden (17) das wenigstens eine Leuchtmittel (16) mit diesem Ende (17) optisch gekoppelt ist und die Tiefe und/oder die Dichte der Rillen, Kerben (20) und/oder Streukörper mit größerer Entfernung von diesem Ende (17) zunehmen.

6. Haushaltskältegerät nach Anspruch 3 oder 4, **dadurch gekennzeichnet, dass** beide Enden (17) des Lichtleiters (11) mit jeweils wenigstens einem der Leuchtmittel (16) optisch gekoppelt ist und die Tiefe und/oder die Dichte der Rillen, Kerben (20) und/oder Streukörper von den beiden Enden (17) in Richtung Mitte der Lichtleiters (11) zunehmen.

7. Haushaltskältegerät nach einem der Ansprüche 1 bis 6, **dadurch gekennzeichnet, dass** die die Optik (21) bildende Wölbung der Vorderseite (14) asymmetrisch relativ zu einer Ebene (Z) ausgebildet ist, welche rechtwinklig zur Rückseite (13), mittig bezüglich der Breite (b) und längs der Länge (l) des Lichtleiters (11) ausgerichtet ist.

## Claims

1. Domestic refrigeration device, having a thermally-insulated carcass (10) with an inner container (2) which delimits a coolable interior (3) intended for the storage of food, a refrigeration device for cooling the coolable interior (3), a door leaf (4) which is intended to close off the coolable interior (3) in the closed state and to make it accessible in the open state, and an interior illumination device (9) fastened to the inner container (2), especially in a recess (12) of the inner container (2) for illuminating the coolable interior (3) when the door leaf (4) is open, wherein the illumination device has at least one means of illumination (16) and an elongated optical waveguide (11), and wherein the optical waveguide (11) has a length (1), two ends (17), a back side (13) and a front side (14) lying opposite the back side (13), wherein one of the two ends (17) is optically coupled to the at least one means of illumination (16) or each of the two ends (17) is optically coupled to at least one of the means of illumination (16), wherein the back side (13) of the optical waveguide (11) has a coupling-out structure (19), which is an integral component of the back side (13) of the optical waveguide (11) and which is configured to couple out the light coupled into the optical waveguide (11), at least over a majority of its entire length (1), out of the waveguide (11) via its front side (14), and wherein the front side (14) of the optical waveguide (11) is embodied as optics (21) integrated into the optical waveguide (11) in accordance with a desired emission characteristic of the illumination device (9),
**characterised in that** the optics (21) are embodied as a convex curvature of the front side (14) of the optical waveguide (11), which preferably runs evenly at least over a majority of the length (1) of the optical waveguide (11).

2. Domestic refrigeration device according to claim 1, **characterised in that** the coupling-out structure (19) extends over the entire length (1) of the optical waveguide (11) on its back side (13).

3. Domestic refrigeration device according to claim 1 or 2, **characterised in that** the coupling-out structure (19) is designed as channels, grooves (20) and/or scattering elements introduced into the back side (13) of the optical waveguide (11).

4. Domestic refrigeration device according to claim 3, **characterised in that** the channels, grooves (20) and/or scattering elements are embodied as pyramid shapes, as cylinder shapes especially with a circular base surface and/or as hemispherical shapes.

5. Domestic refrigeration device according to claim 3 or 4, **characterised in that** only at one of the two ends (17) is the at least one means of illumination (16) optically coupled to this end (17) and the depth and/or the density of the channels, grooves (20) and/or scattering elements increase as the distance from this end (17) increases.

6. Domestic refrigeration device according to claim 3 or 4, **characterised in that** both ends (17) of the optical waveguide (11) are optically coupled to at least one of the means of illumination (16) in each case and that the depth and/or the density of the channels, grooves (20) and/or scattering elements increase from the two ends (17) in the direction of the centre of the optical waveguide (11).

7. Domestic refrigeration device according to one of claims 1 to 6, **characterised in that** the curvature of the front side (14) forming the optics (21) is embodied asymmetrically relative to a plane (Z), which is aligned at right angles to the back side (13) centrally in relation to the breadth (b) and along the length (1) of the optical waveguide (11).

## Revendications

1. Appareil ménager frigorifique présentant un corps (10) calorifugé doté d'un réservoir intérieur (2) qui délimite un espace intérieur (3) réfrigérable, ménagé pour le stockage d'aliments, un dispositif frigorifique destiné à réfrigérer l'espace intérieur (3) réfrigérable, un panneau de porte (4) qui est ménagé, à l'état fermé, pour fermer l'espace intérieur (3) réfrigérable et le rendre accessible à l'état ouvert, et un éclairage (9) d'espace intérieur fixé sur le réservoir intérieur (2), notamment dans un approfondissement (12) du réservoir intérieur (2), destiné à éclairer l'espace intérieur (3) réfrigérable lorsque le panneau de porte (4) est ouvert, l'éclairage présentant au moins une ampoule (16) et une fibre optique (11) oblongue, la fibre optique (11) présentant une longueur (l), deux extrémités (17), un côté arrière (13) et un côté avant (14) opposé au côté arrière (13), une des deux extrémités (17) étant optiquement couplée à l'au moins une ampoule (16) ou chacune des deux extrémités (17) étant optiquement couplée à au moins une des ampoules (16), le côté arrière (13) de la fibre optique (11) présentant une structure de découplage (19) qui fait partie intégrante du côté arrière (13) de la fibre optique (1) et est configurée pour découpler de la fibre optique (11) la lumière couplée dans la fibre optique (11) au moins sur la grande partie de sa longueur totale (l) par l'intermédiaire du côté avant (14) de celle-ci, et le côté avant (14) de la fibre optique (11) étant réalisé en tant qu'un dispositif optique (21) intégré dans la fibre optique (11) de manière correspondant à une caractéristique de rayonnement souhaitée de l'éclairage (9), **caractérisé en ce que**
le dispositif optique (21) est réalisé en tant qu'un bombement convexe du côté avant (14) de la fibre optique (11), lequel s'étend de préférence de manière régulière au moins sur une grande partie de la longueur (l) de la fibre optique (11).

2. Appareil ménager frigorifique selon la revendication 1, **caractérisé en ce que** la structure de découplage (19) s'étend sur la longueur totale (l) de la fibre optique (11), sur le côté arrière (13) de celle-ci.

3. Appareil ménager frigorifique selon la revendication 1 ou 2, **caractérisé en ce que** la structure de découplage (19) est réalisée en tant que rainures, entailles (20) et/ou corps de diffusion placés dans le côté arrière (13) de la fibre optique (11).

4. Appareil ménager frigorifique selon la revendication 3, **caractérisé en ce que** les rainures, entailles (20) et/ou corps de diffusion sont réalisés en forme de pyramide, en forme de cylindre avec notamment une surface de base circulaire, et/ou en forme de demi-sphère.

5. Appareil ménager frigorifique selon la revendication 3 ou 4, **caractérisé en ce que** seulement à l'une des deux extrémités (17), l'au moins une ampoule (16) est optiquement couplée à cette extrémité (17), et **en ce que** la profondeur et/ou la densité des rainures, entailles (20) et/ou corps de diffusion augmentent au fur et à mesure que l'éloignement de cette extrémité (17) croît.

6. Appareil ménager frigorifique selon la revendication 3 ou 4, **caractérisé en ce que** les deux extrémités (17) de la fibre optique (11) sont optiquement couplées à respectivement au moins une des ampoules (16), et **en ce que** la profondeur et/ou la densité des rainures, entailles (20) et/ou corps de diffusion augmentent des deux extrémités (17) en direction du milieu de la fibre optique (11).

7. Appareil ménager frigorifique selon l'une quelconque des revendications 1 à 6, **caractérisé en ce que** le bombement du côté avant (14) formant le dispositif optique (21) est réalisé de manière asymétrique par rapport à un plan (Z) qui est orienté en angle droit par rapport au côté arrière (13), de manière centrée par rapport à la largeur (b) et le long de la longueur (l) de la fibre optique (11).
